Europäisches Patentamt

European Patent Office

Office européen des brevets

(11) Publication number: **0 477 823 A2**

# EUROPEAN PATENT APPLICATION

(21) Application number: **91116155.2**

(22) Date of filing: **23.09.91**

(51) Int. Cl.5: **H04N 7/13, H03H 17/06**

(30) Priority: **25.09.90 FI 904717**

(43) Date of publication of application:
**01.04.92 Bulletin 92/14**

(84) Designated Contracting States:
**DE ES FR GB IT NL SE**

(71) Applicant: **SALORA OY**
**Salorankatu 5-7**
**SF-241 00 Salo(FI)**

(72) Inventor: **Lehtonen, Arto**
**Lukonmäenkatu 18 C 17**
**SF-33700 Tampere(FI)**

(74) Representative: **Liska, Horst, Dr.-Ing. et al**
**Patentanwälte H. Weickmann, Dr. K. Fincke,**
**F.A. Weickmann, B. Huber, Dr. H. Liska, Dr. J.**
**Prechtel Kopernikusstrasse 9 Postfach 86 08**
**20**
**W-8000 München 86(DE)**

(54) Method and apparatus for digital interpolation of a pixel.

(57) The invention relates to a method and interpolator for digital interpolation of a pixel, wherein a quincunx sub-sampled digital video signal is converted to an orthogonally sampled signal, signals representative of the pixels (X1-X8) neighboring the pixel to be interpolated being taken via any necessary delay means (10, 20) to the inputs of a linear filter and combined therein, weighted in a predetermined manner. In order to improve the quality of the picture, there is connected, at a point after the linear filter, a non-linear filter (40) in which, on the one hand, the output signal of the linear filter and, on the other hand, some (X2, X5, X4, X7) of the said signals representative of the pixels neighboring the pixel are combined, in which case the output signal of the non-linear filter will represent the pixel to be interpolated.

EP 0 477 823 A2

FIG. 3

The present invention relates to a method for the digital interpolation of a pixel, wherein a quincunx sub-sampled digital video signal is converted into an orthogonally sampled signal, the signals representative of the pixels located around the pixel to be interpolated being taken, via any necessary delay means, to filter inputs and combined therein, weighted in a predetermined manner. The invention also relates to an apparatus for carrying out the method.

A number of new television systems use a video signal the bandwidth of which is greater than the bandwidth used in current television systems. In addition to actual video information, also other information is transmitted in the same band, for example information regarding movement contained in the television picture being transmitted. In adopting new systems, at least at the initial stage it would be most economical to exploit the current systems as far as possible, and therefore it should be possible to transmit the video signal of these new systems by using the current channels reserved for television broadcasts. Therefore the bandwidth of the video signal of new systems should be limited in some manner to enable it to be transmitted via current channels.

To limit the frequency band of a video signal, pictures can be sub-sampled before their being transmitted in a transfer channel. Sub-sampling is used, for example, in HDTV systems, in which a higher-definition picture, which contains more information than a normal picture, is transmitted by using current transfer channels.

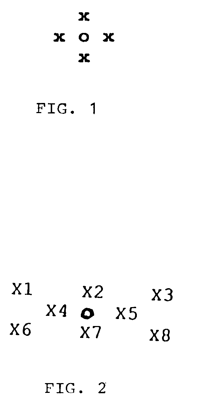

One such new television system is the Eureka95 HDTV system, in which also information on movement is transmitted in addition to the video signal. The video signal being transmitted is compressed with the help of this information on movement. In the transmitter the video signal is sub-sampled and, as a result, the bandwidth of the video signal transmitted will be compatible with the television channels currently in use. The received video signal must be processed in some manner in the receiver in order to obtain a signal with the original bandwidth. For this purpose, specific signal processing circuits, so-called interpolators, which carry out the necessary processing operation, are used in the receiver. The interpolator circuits process the sampled video signal, forming completely new samples between the received samples. The new samples are counted within each television picture. Figure 1 shows a so-called quincunx sampling pattern, which is a fragment of three successive lines. In it the samples (pixels) of adjacent lines are offset from each other in the vertical plane. The pixel to be interpolated is indicated by o, and the known, immediately neighboring pixels, obtained from the video signal, are indicated by x.

In this sampling pattern there are four known neighboring samples. In a three-dimensional environment, pixels of the preceding field and the subsequent field are additionally counted among the neighboring samples. The new pixel o to be interpolated is calculated by some known method. It is clear that the quantity of line and picture memory required by the interpolation is greater the greater is the number of samples in the time space that are included in the interpolation.

In the receiver, the missing pixels must be interpolated with the help of the transmitted pixels. The quality of the picture is largely dependent on the operation of the said interpolator circuits. In current systems, such as the Eureka95 HDTV system, the interpolator circuits used are fixed, and they operate according to the same selected method regardless of the content of the video signal being processed. Unsatisfactorily performed interpolation of the missing pixels is manifested in a lack of sharpness of the television picture shown on the receiver, incoherence of the details of the picture, and breaks or distortions of the picture. Especially areas on various lines and edges shown in the picture are difficult.

The object of the present invention is to provide an interpolation method and an interpolator by using which an improved picture quality is achieved and, in particular, narrow lines can be retained unbroken and details sharp. To accomplish this, the method according to the invention is characterized in what is stated in Claim 1, whereas the characteristics of the interpolator according to the invention are respectively indicated in Claim 4.

The interpolator according to the invention thus includes a known filter, for example a linear filter, which takes as inputs the transmitted pixels located around the pixel to be interpolated. The output of this filter is corrected by a non-linear operation which takes as inputs, in addition to the output of the linear filter, those four transmitted pixels which are located closest around the pixel to be interpolated.

The non-linear operation may, for example, correct the output of a linear filter so that the output is limited to be between those two of the four other inputs (transmitted pixels) which have the midmost numerical values. This non-linear operation can in practice be implemented using a median filter having five inputs.

Furthermore, the output of the first filter may be corrected by limiting it to be between the vertical and horizontal mean values of the transmitted pixels.

Owing to the non-linear operation, the linear filter can be very simple. The linear filter is designed to be such that it only retains all narrow lines, regardless of the edges in some cases possibly becoming overemphasized. However, the non-linear operator always limits the output of the linear filter to a sensible value.

The invention will be described below in greater detail in the form of an example and with reference to the accompanying drawings, wherein

Figure 1 depicts the already described quincunx sampling pattern having four neighboring pixels,

Figure 2 depicts the sampling pattern used in the method according to the invention, and

Figure 3 depicts, in the form of a block diagram, the interpolator for carrying out the method according to the invention.

The sampling pattern according to Figure 2 is thus made up of three pixels X1, X2 and X3 from the line preceding the pixel to be interpolated, two neighboring pixels X4 and X5 from the line of the pixel o, and again three pixels X6, X7 and X8 from the subsequent line.

In this example, a sampling pattern of eight pixels is thus used, but it is clear that the number of pixels to be taken into account may be other than eight, but preferably, however, an even number.

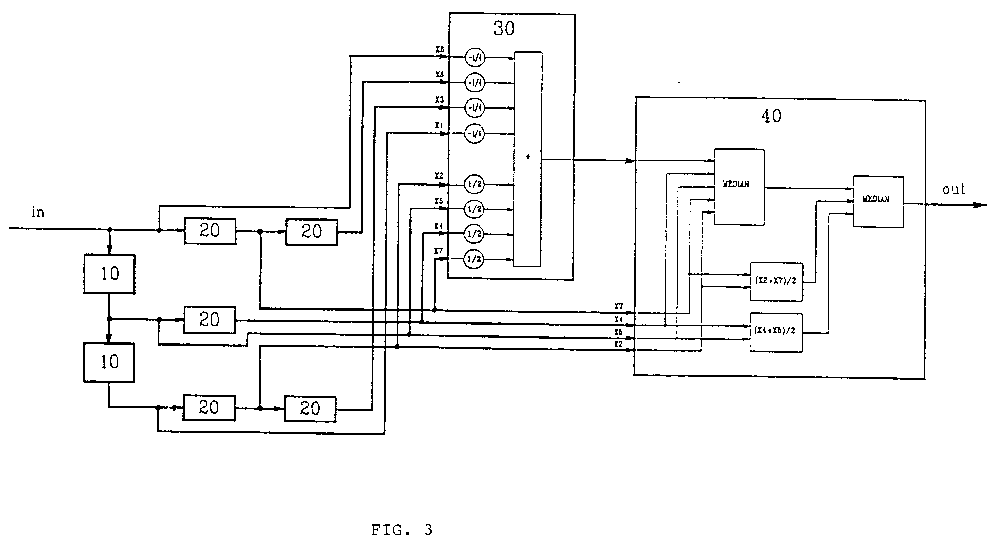

In the interpolator according to Figure 3, a two-dimensional filter mask is formed from a unidimensional video signal with the help of line-delay means 10 and sample-delay means 20. The pixels (X1-X8) of the filter mask are applied as inputs to the linear filter 30. The linear filter of the example has only eight inputs, but the filter mask may also be larger. The filter coefficients presented are also merely examples.

In the non-linear operation 40, the output of the linear filter is first limited to between those two of the four other inputs (the four transmitted pixels closest to the pixel to be interpolated, i.e. X2, X4, X5 and X7) which have the midmost numerical values. This is implemented using a 5-point median. Thereafter the output is further limited to be between the vertical (X2 and X7) and horizontal (X4 and X5) mean values of the original pixels. For this purpose, a 3-point median is required.

The successive medians can also be replaced by one larger, 7-point median, but this implementation is in general more complicated.

Usually the interpolation according to the invention is applied to pictures in which the sub-sampling pattern is formed only in the spatial plane (vertical and horizontal plane). The interpolation method can, however, also be applied for converting an interlaced picture to an uninterlaced picture. In this case the quincunx sub-sampling is carried out in two dimensions so that one dimension is spatial (vertical dimension) and the other is temporal (time dimension, successive pictures). In the latter application the line delays 10 of the interpolator described above are replaced with field delays and the sample delays 20 with line delays.

## Claims

1. A method for the digital interpolation of a pixel, wherein a quincunx sub-sampled digital video signal is converted into an orthogonally sampled signal, in which case signals representative of pixels (X1-X8) around the pixel to be interpolated are taken via any necessary delay means (10, 20) to the inputs of a filter (30) and are combined therein, weighted in a predetermined manner, **characterized** in that the output signal of the said filter (30) and some (X2, X5, X4, X7) of the above-mentioned signals representative of the pixels (X1-X8) around the pixel to be interpolated are taken to the inputs of a non-linear filter (40) and are combined in the non-linear filter (40) in order to form a signal representative of the pixel to be interpolated.

2. A method according to Claim 1, **characterized** in that in the non-linear filter (40) the output is limited so as to be between the two midmost of the group of the four pixels closest to the pixel to be interpolated.

3. A method according to Claim 1 or 2, **characterized** in that in the non-linear filter (40) the output is limited so as to be between, on the one hand, the mean value of two pixels (X2, X7) taken vertically from the four pixels closest to the pixel to be interpolated and, on the other hand, the mean value of two pixels (X4, X5) taken horizontally.

4. A digital pixel interpolator, in which a quincunx sub-sampled digital video signal is converted into an orthogonally sampled signal and which includes a filter (30) to the inputs of which there are connected, when necessary through delay means (10, 20), signals representative of the pixels (X1-X8) located around the pixel to be interpolated, the said signals being combined in the filter (30), weighted in a predetermined manner, **characterized** in that at a point after the said filter (30) there is connected a non-linear filter (40) to the inputs of which there are taken, on the one hand, the output signal of the first-mentioned filter (30) and, on the other hand, some (X2, X5, X4, X7) of the signals representative of the pixels (X1-X8) located around the pixel to be interpolated, in which case the output signal of the non-linear filter (40) represents the pixel to be interpolated.

5. An interpolator according to Claim 4, **characterized** in that the non-linear filter (40) comprises a median circuit which limits its output to be between the two midmost pixels from among the group of the four pixels closest to the pixel to be interpolated.

6. An interpolator according to Claim 4 or 5, **characterized** in that it includes a median circuit which limits its output to be between, on the one hand, the mean value of the two pixels (X2, X7) taken vertically from among the group of four pixels closest to the pixel to be interpolated and, on the other hand, the mean value of the two pixels (X4, X5) taken horizontally.

7. An interpolator according to any of Claims 4-6, **characterized** in that the first filter (30) is a linear filter.

```
        x
     x  o  x
        x
```

FIG. 1


```
X1        X2      X3
     X4  o   X5
X6        X7      X8
```

FIG. 2

FIG. 3

EP 0 477 823 A2